# EUROPEAN PATENT SPECIFICATION

(11) **EP 0 929 238 B1**
(45) Date of publication and mention of the grant of the patent: **15.01.2003**
(21) Application number: 97944517.8
(22) Date of filing: 29.09.1997
(51) Int. Cl.: A23L 3/00

(54) **THERMOPLASTIC FOOD PACKAGING FILM PROVIDING FUNGAL RESISTANCE TO FOOD PACKAGED THEREIN**
THERMOPLASTISCHE KUNSTSTOFFFOLIE FÜR LEBENSMITTELVERPACKUNG ZUM SCHUTZ GEGEN PILZE IM VERPACKTEN LEBENSMITTEL
FEUIL THERMOPLASTIQUE D'EMBALLAGE ALIMENTAIRE CONFERANT UNE RESISTANCE ANTI-FONGIQUE AUX ALIMENTS QU'IL CONTIENT

(30) Priority: 03.10.1996 US 725435
(43) Date of publication of application: 21.07.1999
(73) Proprietor: E.I. DU PONT DE NEMOURS AND COMPANY, Wilmington Delaware 19898 (US)
(72) Inventor: VISIOLI, Donna, Lynn, Lower Gwynedd, PA 19002 (US)
(74) Representative: Jones, Alan John
(86) International application number: US9717406
(87) International publication number: WO98014073

(56) References cited:
- EP-A- 0 101 102
- US-A- 4 747 902
- Y.M. WENG ET AL.: "anhydrides as antimycotic agents added to polyethylene films for food packaging" PACKAGING TECHNOLOGY AND SCIENCE, vol. 6, no. 3, 1993, pages 123-128, XP002067060
- V.A. GOLDADE ET AL.: "polymeric packaging film for food products" PACKAGING TECHNOLOGY AND SCIENCE, vol. 8, no. 3, 1995, pages 149-158, XP002067061

## Description

### BACKGROUND OF THE INVENTION

### Field of the Invention

The invention relates to polymer films useful for packaging food which prevent or retard microbial, especially fungal growth on food packaged within such film. The packaging films are formed from certain thermoplastic polymers containing a limited amount of certain antimicrobial, particularly antifungal agents, which are non-toxic. The agents include benzoic, sorbic acids, their esters and salts, as well as propionic acid esters and salts. Film packages are antifungally effective without the need, after enclosing food items, to heat the package film to release the antimicrobial agent into the package space.

### Description of Related Art

Antimicrobial agents are agents which act against growth of microorganisms (microbes), principally bacteria and fungi. Their effectiveness may be specific to a certain bacterium or a certain fungus or more generally effective to many bacteria or many fungi, or even effective for both bacteria and fungi to some degree. Fungal and bacterial growth on a substrate such as a food depend on both the chemical and physical nature of the substrate and its surrounding environment. Thus the substrates acidity, its moisture content, and characteristics of its physical form such as its porosity or state of division or surface area will affect microbial growth on or in it.

Antimicrobial agents have long been used in the food industry. The agents may be mixed with or coated on the surface of food. For packaged food, the agent may also be coated on the inner surface of the package, to provide antimicrobial action on the food, usually by direct contact of the package surface with the food. In some cases, efforts have been directed to prevention of microbial growth in the packaging material itself rather than the contents, and, in a sort of intermediate situation, to prevention of microbial growth in or on 'quasi-packaging' or 'quasi-food' material such as sausage casing. Since casing is edible it may be considered as part of the food itself.

Related art may be concerned primarily with the method of combining an antimicrobial agent with (into or onto) a packaging material, or the method of transferring or ease of transfer of the agent from a packaging material into or onto enclosed food. Or the art may be primarily concerned with the nature and effectiveness of the agent per se against microbial growth, either on the food or on the package or both. The existing art which might relate to the present invention is thus quite varied in aspect.

The effectiveness of an antimicrobial agent per se. will depend not only on the particular microbe of concern, but also on both the agent's physical characteristics such as fat and water solubility and its volatility, as well as on its chemical characteristics.

Many antimicrobial agents, both antibacterial and antimycotic (antifungal, fungicidal) are well known and have been used for a long time.
They may be essentially non-toxic, or, even for food use, somewhat toxic if the food is typically washed before sale or before consumption, as for instance with some fruits. Sodium benzoate, has been known and used for at least 60 years for retardation of both mold and bacterial growth in and on food or food packaging products. Acid media dissociate the salt somewhat to form benzoic acid which is generally considered a far more active agent than the salt itself.

U.S. Patent No. 2,379,294 (Gooding, issued in 1940) discloses use of crotonic acid, sorbic acid, alphahexanoic acid and the salts and esters of these acids as antifungal agents, when they are either incorporated into the products (including food, leather and tobacco) at a level of up to 1 weight percent, applied to the exterior of the products, or applied to the surface of a wrapper for the product such as parchment paper, at a level of up to about 10 weight percent.

U.S. Patent No. 2,567,010 (Coleman et al.) discloses wrapping materials 'treated to bear' 0.3 to 10 weight percent dehydroacetic acid, to give a 'fungistatic' sheet. Treated to bear includes introducing the dehydroacetic acid into porous papers by addition of the agent to the fibers during paper making or treating the porous paper with a solution of the agent. For parchment paper, glassine paper or regenerated cellulose, the fungistatic agent is applied as an ingredient of a surface coating which may be a lacquer or a melt. Non-fibrous thermoplastic films such as vinyl chloride-vinyl acetate copolymer or vinylidene chloride copolymers may be 'made to contain' the agent, though the disclosure indicates that it is 'considered most advantageous to apply the agent to the surface of such films'. Sliced bread and slabs of Cheddar cheese had resistance to fungal growth when wrapped in such sheets.

U.S. 2,858,225 (Gooding et al.) discloses use of antifungal wrapping to prevent surface mold on the wrapped article or contents, arising due to air pockets between the wrapped article or contents and the wrapper together with an irregular external surface or configuration of the article or contents.
The packaged contents included cheese, fruit and bread. The preferred disclosed fungicides are sorbic and benzoic acid. They are bound to the inner surface of the wrapper using an alcoholic solution of a binder such as shellac or zein containing the fungistatic agents, and are left as crystal deposits firmly bound on the inner-surface of the wrapper. This provides about from 0.5 to 15 grams of fungicide per 1000 square feet of wrapper. The fungicide is transferred to the surface of the food articles to be wrapped by a process which involves heating the wrapped-article package to a temperature of 450 to 550°F for 5 to 30 seconds, so that the crystals deposit on the cooler food surface.

U.S. 2,906,646 (Smith et al.) discloses a method of producing a particulate deposit of sorbic acid or other fungicides from slurry solution onto a pliant sheet which is coated with a heat-sealable thermoplastic wax or wax and rubber, such that the spacing of sorbic acid crystal fungicide particles on top of the heat-sealable coating does not interfere with heat-sealing of that coating in forming a package. It is disclosed that 'the effective remote action ranges of sorbic acid and similar substances due both to volatilization and diffusion far exceed spacing between particles which is necessary to produce good heat sealing'. It is disclosed that with 'sorbic acid, hexanoic acid, crotonic acid and the like, a certain limited vapor tension renders them effective within a limited range beyond actual physical contact' (with the food).

U.S. Patent 2,979,410 (Parlour) discloses transparent, heat-shrinkable films such as polyvinylidene chloride and polyester, coated with a water-sensitive material such as certain gums and polyvinyl alcohol, containing antibiotic and antifungal agents, especially antifungal agents such as sorbic acid, succinic acid salts of these acids and propionic acid salts. The films are required to be heat-shrunk, providing intimate contact with enclosed food to generate antibacterial and antifungal action.

Canadian Patent 906715 discloses a method of preparing regenerated cellulose films useful as sausage casing, the casing itself being resistant to fungal growth, cellulose being normally particularly susceptible to such growth. The cellulose is regenerated in such a way that it contains antimycotic agents such as esters of p-hydroxybenzoic acid.

South African patent application 78/2762 describes packaging fruit in antifungally modified HDPE of density greater than 0.941g/cc, to produce a sealed package around the fruit. HDPE was the only material found suitable for this use. The HDPE may be coated with one of a vast range of fungicides. The fungicides which are disclosed as suitable include diphenyl, 2-aminobutane, sodium metabisulphite, and some aldehydes amongst others, several of which are quite toxic. Sorbic acid, benzoic acid and their derivates however are not mentioned. It is also disclosed that fungicides that melt lower than about 200°C, the extrusion temperature of HDPE, but which do not dissipate at that temperature, can be mixed with HDPE pellets prior to extrusion, leaving the fungicide in the film. HDPE however is highly crystalline and produces a hazy film.

European Patent 0101,102 also describes the use of fungicides incorporated into films such as high and low density polyethylene, polypropylene and ionomeric polyolefins, for fruit packaging. Certain imidazole and triazole derivatives are found to be useful because they are disclosed as ' having good vapor phase activity without being too volatile'. After packaging, the package is heated to shrink the package around individual fruit.

JP 90003421 discloses antimold bags which are formed from a polyolefin resin such as low or high density polyethylene or polypropylene, containing from 0.1 to 5 weight percent of vanillin (4-hydroxy-3-methoxy-benzaldehyde) or ethyl vanillin. However vanillin oxidizes and discolors in moist air and, of course, has an intense smell.

In Packaging Technology and Science, Vol 6, No 3, 1993, pp 123 - 126, is described a film containing on antimycotic agent prepared by heating a low density polyethylene, benzoic anhydride, and toluene to reflux. The solvent is evaporated and the film is prepared by heat pressing the residue from the dried low density polyethylene.

There remains a need for clear or near-clear, film packaging materials which can be used to produce closed or sealed bags for packaging high moisture fungi-prone foods, such that the packaged food is less subject to fungal growth, without the need for intimate contact with the film package, where the fungicide is non-toxic, where no special heat treatment of the package is necessary to release fungicide, and where the fungicide is conveniently contained within the package material rather than coated on it.

### SUMMARY OF THE INVENTION

The invention depends on the discovery that certain well known and long-utilized non-toxic fungicides can be directly incorporated in certain clear or near-clear thermoplastics at a level such that the blend can be formed into film which is near-clear, but at a level which, when formed into packages enclosing fungi-prone food, will retard the growth of fungi on the food without any need to heat-release the fungicide from the packaging film into the package space.

Specifically the invention comprises a film of at least one layer, the at least one layer comprising a layer made from
(a) a thermoplastic selected from the group consisting of low density polyethylene, linear low density polyethylene, ethylene vinyl acetate copolymers, ethylene (meth)acrylic acid copolymers, and sodium, zinc, magnesium or lithium ionomers of ethylene (meth)acrylic acid copolymers.
(b) a fungicidal compound melt-blended with the thermoplastic, in an amount, based on the blend, of from 0.15 to 10 weight percent, the fungicide selected from the group consisting of sorbic acid, benzoic acid, p-hydroxybenzoic acid, non-toxic metal salts of those acids, 1 to 4 carbon-alkyl alkyl esters of those acids, and propionic acid non-toxic metal salts and 1 to 4 carbon-alkyl alkyl esters of propionic acid,
   the at least one layer having a haze level of 15% or below.

A further aspect of the invention are bags, especially heat-sealable bags, formed from the above thermoplastic fungicide-containing films or composite films having the thermoplastic fungicide-containing film as an inner layer if the film is a multilayer film.

Yet a further aspect of the invention is a method of retarding fungal growth on a fungi-prone food product, consisting essentially of taking the bags above, inserting any food which would be subject to fungal growth in a comparable package containing no fungicide, and sealing the bags by heat-seal or non heat-seal methods.

### DETAILED DESCRIPTION OF THE INVENTION

In this disclosure, the word copolymer means a 'direct' near-random copolymer (as distinct from a graft copolymer) polymerized from two or more copolymers, and thus includes dipolymers, terpolymers etc.

Surprisingly, it has been found that certain well known non-toxic fungicides may be simply incorporated into certain thermoplastics by melt-blending, and the resultant blend materials can form clear or near-clear film which is effective in retarding fungal growth on food packaged within such film. No elaborate coating means and no heat treatments are necessary to release fungicides from the films.

The polymers suitable for this invention are any thermally stable, thermoplastic polymers which are low in crystallinity, so that when made into films of 0.000508 to 0.000762 cm (0.2 to 3.0 mil) thickness form clear or near-clear films. Near-clear means having a haze level of less than 15% as measured by ASTM D-1003. Suitable polymers which can provide near-clear films include conventional free-radical low density polyethylene, linear low density polyethylene including so-called ultra low density linear polyethylene, these linear polyethylenes made using either co-ordination catalysts or metallocene catalysts, copolymers of ethylene with up to about 40 weight percent of vinyl acetate, copolymers of ethylene with up to about 25 weight percent of the unsaturated carboxylic acids acrylic acid or methacrylic acid (herein summarily referred to as (meth)acrylic acid). The latter acid copolymers may optionally contain an alkyl acrylate whose alkyl group contains from 1 to 8 carbon atoms in an amount of up to 40 weight percent, provided the total comonomer content - acid plus acrylate - is no more than 50 weight percent. The acid copolymers may also have from 10 to 70 percent of their acid groups neutralized to form ionomers with metal ions including sodium, zinc, magnesium or lithium, or a mix of these. Metals are not readily extractable from ionomers. Nevertheless, lithium ionomers are not FDA approved, and lithium ionomers are less preferred for the package films of this invention. Such acid copolymers are sold, for example, under the tradename of Nucrel® and ionomers under the tradename Surlyn® ionomer resins, by the Du Pont Company.

All of these polymers are thermoplastic, and melt below 250°C. They may be readily extrusion blended with the fungicides of this invention, using conventional mixing extruders or other conventional melt-mixing equipment. Melt temperatures of less than 200°C are preferable for blending the free acids which are more volatile than metal salts. For metal salts, temperature used may be higher than 200°C.

Suitable fungicides are those which are well known non-toxic fungicides. They include benzoic acid, p-hydroxybenzoic acid, and sorbic acid as well as any non-toxic metal salts of those acids, especially calcium, sodium and potassium salts, as well as 1 to 4 carbon-alkyl alkyl esters of those acids as well as similar propionic acid salts and alkyl esters. Propionic acid itself has a boiling point of 141°C and is excessively volatile. Benzoic and sorbic acid have boiling points of about 249 and 228°C, and melting points of 122 and 134°C respectively. Such acids can be subject to considerable loss, and hence wasteful loss due to volatilization when the melt temperature of the thermoplastic during extrusion blending is much above 200°C. However, unlike their metal salts, which are higher melting, they will be molten at extrusion temperatures, and will tend to disperse well. It is desirable therefore to keep the melt temperature as low as is practical. Many of the suitable polymers however, can be extrusion blended at temperatures lower than 200°C. The metal salts will be less volatile, while the esters may be of comparable or slightly lower boiling points than the free acids. Since the metal salts are high melting, they will be subject to less loss during extrusion blending. On the other hand, their *melting* point is typically above 250°C, and this can result in a somewhat grainy appearance in extruded film if the fungicide is not melted or finely dispersed during melt blending.

These metal salts and esters are typically subject to partial hydrolysis to the free acid to some degree, if the food is somewhat acidic. The art suggests that it is the free acids which are particularly active as fungicides. While the salts are less volatile than the free acids, and hence blending with thermoplastics without loss of the agent is easier, since it is the free acid which is the more mycotically active, more salt will generally be required for comparable antifungal effectiveness. The amount of hydrolysis to free acid will depend on the particular salt and the particular food acidity and moisture content. Esters may be effective in their own right at levels comparable to effective levels of free acid. The amount of hydrolysis of esters, if any, will depend on the particular ester as well as the food.

It is within the skill of the artisan to balance the extrusion temperature suitable for a particular thermoplastic against the volatility of the fungicide so that an effective amount remains in the extruded film while at the same time, excessive and uneconomical loss of the fungicide does not occur.

A certain degree of volatility of the fungicidal agent is however essential for it to act on packaged materials which are not in direct contact with the packaging material. In other words, the fungicide has to volatilize and reach the surfaces of the enclosed food product, so that the fungal growth, (which is typically an aerobic and hence surface phenomenon), will be retarded. Therefore, very low volatility may mean lower effectiveness, necessitating a higher level to achieve the required level of antifungal activity. There are thus two offsetting factors; volatility for increased effectiveness in penetrating the space surrounding the food, and lack of volatility to prevent uneconomic loss during melt blending.

For a particular food, packaged in a defined way, the rate of fungal growth under defined storage conditions can, in principle be determined. However, it will be extremely difficult to package the food under precisely the same conditions unless the surrounding atmosphere is strictly controlled. When food is packaged without a consistent controlled atmosphere, the spore concentration and type entering the package is likely to vary from day to day, and from location to location. The food itself is also likely to be variable. In addition, fungal growth itself, all else being the same, is likely to be somewhat variable. In order to quantify the effectiveness of a given concentration of a given fungicide in a given thermoplastic, towards a given food, it is necessary to first define growth rate (e.g. amount of fungus developed in a given time) in an equivalent package without fungicide, then test the same food, packaged under identical conditions. While some sort of reasonable determination of retardation rate for a precisely defined package (defined food, fungicide, level, packaging atmosphere, packaging conditions, thermoplastic, melt-blending conditions, storage conditions etc.,) may be possible, it is unlikely that such a test would be easy to reproduce elsewhere. Quite apart from the large number of variables needed to be controlled in the package and packaging operation, a given food is likely to be variable, even from the same source. A generic cheese, Muenster or Cheddar for example will vary even from the same manufacturer, and vary even more from one manufacturer to another.

Fungal growth will vary not just between different foods of the same type (e.g. different cheeses), but even more so between foods of different type such as between a cheese, a jam and a meat product. Jams and jellies generally have lower water activity (which will relate to the relative humidity surrounding the product in an enclosed space) compared with cheese (about 0.75 compared with 0.87). Different food products will have quite different pH levels, and most antifungal agents, including the ones employed in this invention, tend to be most effective over somewhat different pH ranges.

The degree of retardation of fungal growth desired will vary from one food producer or packager to another. While it would be desirable to completely eliminate mold growth for an extended period of time on most foods, elimination of mold growth for even a moderate period of time can have an economic benefit, in that shelf-life will be increased. As indicated above, rate of growth will vary from food to food and, of course, will depend greatly on typical storage conditions which will vary for different foods. Therefore, while the data shown below may provide a rough guide to the amount of a particular fungicide needed, it will be virtually impossible to generate some index-value for a particular fungicide which can be used as a precise predictive tool by a packaged-food producer . However it is possible to carry out a reasonably well defined test, and obtain a guide as to effectiveness in retarding mold growth for a given fungicide/thermoplastic package/food combination. It will be nevertheless, generally be necessary for a given producer to carry out some brief tests on his particular product and packaging environment, under storage conditions which relate to his particular product.

Packaging of food many often be carried out under quite sterile conditions, where mold spores are present to a lesser degree than under the test conditions in the test described below in the test procedures section. Also, commercially, food packages may often be kept refrigerated. For these reasons, mold growth in the test described below can generally be expected to be greater than that which would develop in many foods under typical package and storage conditions.

The films of this invention may be single-layer films made from the fungicide-containing thermoplastic only. However, for the vast majority of packaging uses, a fungicide-containing thermoplastic film layer will form one layer in a laminate with one or more other layers. Another layer will typically be a moisture barrier layer, and another may be an oxygen barrier layer. The fungicide-containing thermoplastic layer will form the inner, food-contact layer in bags formed from such multilayer film. The antifungal layer may be from about 0.000508 to 0.000762 cm (0.2 to about 3 mil) thick. Barrier layers are preferably also barriers to the fungicide. Typical suitable barrier layers include poly(ethylene terephthalate), ethylene/vinyl alcohol copolymers. and amorphous nylon.

The upper limit to the amount of fungicide allowable in the film, will depend on the maximum amount of haze deemed acceptable, and by any regulation regarding the amount of agent which can be present in the food itself. Above about 10 weight percent, for many fungicide/thermoplastic combinations, haze will approach an undesirable level. A level of 10 weight percent or so is also a reasonable maximum level of fungicide from a regulation point of view. As an indication of how a limiting amount allowable in food will relate to the amount allowable in the film we can consider the following example calculation. Assume the maximum level of mold inhibitor allowed in cheese is 0.1% by weight. The maximum amount of fungicide which would be allowable in the film package enclosing it would be the amount which, if it all migrated to the cheese would give a 0.1% level in the cheese. A typical 8 ounce (227g) package of cheese requires about 838.71 cm² (130 square inches) of film to package it. For a typical package film layer of 0.00508 cm (0.002 inches (2 mil)) thickness, and a density of about 1.0 g/cc., this would mean the film or film layer would weigh about 4.26 grams. A 0.1% level in 227 grams of cheese is 0.227 grams. If this amount were in the package or package layer rather than the cheese, there would be 0.227 grams in 4.26 grams of package film or film layer or 5.3 weight percent fungicide in the fungicide-containing film or layer. The corresponding calculation for a typical package of bulk cheese, which has greater weight of cheese for the same weight of package works out to be about 11.5 weight percent. Thus if the regulation amount of fungicide allowable in cheese were 0.1%, which is not atypical for instance for benzoic acid in food, 5.3 and 11.5 weight percent would be allowable in the package film material.

### Film and Bag Preparation Procedure

Bags were prepared from simple (i.e., not co-extruded or laminated multilayer) films of the near-clear fungicide-containing thermoplastic. Preparation of film and package bags was carried out as follows. Low density polyethylene (LDPE), grade Alathon® 1540, having a Melt Index of 6.5 grams/10 minutes using ASTM D 1238,(manufactured by Lyondell Petrochemical Corporation, Dallas Texas.) and 10 weight percent, based on the combined weight of LDPE and agent, of various antimicrobial/antifungal agents were compounded together using a 28 mm. twin screw extruder equipped with a vacuum port at the front of the extruder, with a mixing section, a kneading section and a venting section. Melt temperature was about 195°C. The melt blend was extrusion cast into film of 0.058 cm (2 mil) thickness. Bags were made from the film by heat-sealing together two sheets 15.24 cm by 17.78 cm, (6 inches by 7 inches), on three sides.

### Test Procedures.

Haze measurements were carried out using ASTM D-1003. Measurements were made both on extruded film of LDPE and ethylene vinyl acetate copolymers containing 9 weight percent vinyl acetate blended with benzoic acid and sorbic acid and on some solution cast blends of ethylene vinyl acetate containing 33 weight percent vinyl acetate and varying levels of benzoic acid and sorbic acid Extruded films containing metal salts were somewhat grainy, but not particularly hazy, and reliable haze measurements were not achieved. Even haze measurements on extruded film proved rather variable, possible due to irregularities from the die. In any event, however, no extrusion blends with very high level of sorbic acid or benzoic acid remaining after extrusion were obtained due to loss of those volatile fungicides under the conditions used. In the case of extrusion cast films, the level of fungicide was assumed to be the amount put into the blend. Very high levels of fungicide could be obtained in such films. Cast films containing 2% and 33% benzoic acid and sorbic acid were made in order to obtain some sort of calibration of the effects of each of these particular fungicides on haze. These cast films for haze testing were made from Elvax® 3185 ethylene vinyl acetate/fungicide blend solutions in 80/20 toluene/tetrahydrofuran. Films 0.002032 cm (0.8 mil) thick were cast onto 0.0254 cm (10 mil) Mylar® polyester film, then the coated Mylar® was aged at 80°C for 2 minutes before measuring haze.

Testing for mold retardation was carried out using the following test method. Domestic Muenster cheese was freshly shredded with a coarse shredder, and 112 gram samples put into each bag under ambient (not sterile) laboratory conditions. The fourth side of the bag was then closed by heat sealing. The bags were then placed under room fluorescent lighting, using four 40 watt lights about 1.65 meters from the surface of the bags, which were kept at room temperature. Bags were inspected for mold growth on the cheese after 11 and 23 days. The approximate area of mold growth was determined after each of these periods. Mold growth is reported as a percentage of the total surface area of the cheese which has mold on it.

Trace metal analysis was used to determine the amount of metal salt remaining in the films after extrusion blending. Inductively Coupled Plasma-Atomic Emission Spectroscopy, (ICP-AES), measures fifty elements simultaneously, at the ppm/ppb range. An aqueous solution of the sample is aspirated into the center of an argon plasma, an intense electrical field that surrounds a stream or argon gas. An intense oscillating magnetic field causes the argon to ionize and create a very intense emission source. The sample is introduced into this plasma and the resulting emission spectra is measured at wavelengths that are related to each element. The amount of metal salt in the film is calculated, assuming the metal is all present as salt.

### RESULTS AND DISCUSSION OF RESULTS

Table 1 shows the mold area developed for a series of samples made from LDPE and the indicated fungicide. In these samples, 10 weight percent fungicide was put into the blends. It was anticipated there might be considerable loss of free acid or ester fungicide during extrusion blending compared with metal salts of the acid, due to the much greater volatility of the free acids. By using the same initial amount of fungicide a guide to the loss due to volatility under similar extrusion conditions was obtained. For free benzoic acid, the amount remaining was only 0.5 - 0.7 weight percent. For the salts the amount remaining was in the region of 9 weight percent (see Table). Testing for fungal growth was carried out on these samples, despite the large difference in level of fungicide remaining in the films.

The data clearly indicate that all of the materials tested can reduce mold growth by more than 50% under the test conditions used. In several instances, mold growth was completely prevented. Thus, the simple expedient of direct melt blending of these fungicides is sufficient to provide a film which will impart fungal resistance to package contents without the need for elaborate film coating techniques, or the need to heat the film package to volatilize fungicide into the package space. Potassium sorbate, calcium propionate, methyl p-hydroxybenzoate and sodium benzoate can be seen to be particularly effective.

The data indicate that an amount of 0.5 - 0.7 weight percent of benzoic acid in LDPE film completely eliminates mold formation even after 23 days, in the shredded cheese package test used. A level of as low as 0.25 weight percent will be significant in retarding mold growth, and a level as low as 0.15 weight percent will show some effect. A level of 0.15% will be the lowest useful level for free benzoic acid, sorbic acid and p-hydroxybenzoic acid. While levels as high as 10 weight percent can be used, generally no more than 3 weight percent will be very adequate to give high levels of antifungal effectiveness with these acids and their esters. For the metal salts of the acids, much higher levels will generally be needed. Levels of around 9 weight percent in film, based on metal analysis, gave similar mold retardant effect to about 0.5 weight percent benzoic acid. It is likely however, that a small amount of acid hydrolysis product, was also present, if not in the extruded films containing the salts, at least generated on the food surface. While 0.15 weight percent of metal salt present in the packaging film can be effective, particularly if the packaged material is highly acid and capable producing conditions leading to hydrolysis of the salt to the more effective free acid, in general levels of 3 to 10 weight percent metal salts are preferred.

Since only 0.5 to 0.7 weight percent of free benzoic acid in the final blend was left in a feed blend containing 10 weight percent acid, further blending experiments, using much lower levels of benzoic acid were carried out to see how much benzoic acid in the extruder feed blend would be needed to prepare blends with levels of benzoic acid of about this level. These tests established that much lower levels of free acid could be fed into the extruder and still obtain about this level of acid in the extruded film. Thus when 4 and 1.75 weight percent benzoic acid were fed under similar extrusion conditions into the extruder, 0.5 and 0.4-0.5 weight percent acid still remained in the extruder. Feed levels of perhaps only 50 weight percent more than the required level in extruded film could be sufficient provided minimum temperature extrusion conditions are used for the particular thermoplastic employed. Conventional experimentation to determine extrusion conditions, including melt temperature and venting conditions to minimize waste of fungicide, for each particular fungicide are readily within the skill of the artisan. Recovery and re-feeding of volatized acid is also possible.

Table 2 indicates that for benzoic acid and sorbic acid, levels of up to about 10 weight percent are not likely to cause excessive haze. Data for extruded films are limited in that films with high levels of acid were not obtained. However, cast ethylene vinyl acetate copolymer films (33% vinyl acetate) containing 33 weight percent benzoic acid still had less than 15% haze. Sorbic acid appears to cause much higher haze, but in a cast film containing 16.7 weight percent each of benzoic and sorbic acid, i.e., far in excess of the limiting 10 weight percent fungicide claimed, haze was 23%, suggesting sorbic acid did not add excessively to haze at a 16.7 weight percent level, and that 10% sorbic acid would have acceptably low haze. Sorbic acid at 2 weight percent level in cast film gave very low haze of only 3.3%.

**TABLE 1**

| MOLD DEVELOPMENT ON FOOD PACKAGED IN ANTIFUNGAL FILM | | | | |
|---|---|---|---|---|
| Example # | Fungicide | Mold Type/ Area@ 11 hr. | Mold Type/ Area @ 10 hr. | Weight % fungicide in film |
| 1 | none | black/11% | black/11% | - |
| 2 | sodium propionate | green/5% | green/5% | 9.3%* |
| 3 | sorbic acid | black/3% | black/3% | NM |
| 4 | potassium sorbate | none | none | NM |
| 5 | calcium propionate | none | none | 8.1%* |
| 6 | Me- 4-hydroxybenzoate | none | none | NM |
| 7 | Na hydrogen phosphate | green/3% | green/3% | NM |
| 8 | sodium bisulfite | green/1.5% | green 3.5% | NM |
| 9 | sodium benzoate | none | green/3% | 8.9%* |
| 10 | benzoic acid | none | none | 0.5-0.7% |

| | | | | |
|---|---|---|---|---|
| Footnotes to Table 1: NM = Not Measured. * Calculated from metal content in film, using ICP-AES trace metal analysis. | | | | |

**TABLE 2**

| HAZE OF VARIOUS FILMS CONTAINING FUNGICIDE | | | | |
|---|---|---|---|---|
| Polymer | Fungicide | Weight% | Film method | % Haze |
| Alathon 1540 | None | - | Extruded | 14.3 |
| Alathon® 1540 | Benzoic Acid | 2¹ | Extruded | 9.3 |
| Elvax® 3124 | None | - | Extruded | 4.0 |
| Elvax® 3124 | None | - | Blown | 7.82 |
| Elvax® 3124 | Benzoic Acid | 0.5² | Extruded | 5.46 |
| Elvax® 3124 | Sorbic Acid | 2¹ | Extruded | 9.4 |
| Elvax® 3185 | None | - | Cast | 3.89 |
| Elvax® 3185 | Benzoic Acid | 2² | Cast | 2.6 |
| Elvax® 3185 | Benzoic Acid | 33² | Cast | 13.9 |
| Elvax® 3185 | Sorbic Acid | 2² | Cast | 3.3 |
| Elvax® 3185 | Sorbic Acid | 33² | Cast | 71.3 |
| Elvax® 3185 | Benzoic/Sorbic | 16.7/16/7² | Cast | 23.8 |

| | | | | |
|---|---|---|---|---|
| Footnotes to Table 2: 1. In Extruded Feed. | | | | |
| 2. In film. L = Literature Value Elvax® 3124 ethylene/9% vinyl acetate; Elvax® 3185 ethylene/33%vinyl acetate. | | | | |

## Claims

1. A film comprising at least one layer, the at least one layer formed from a composition comprising a blend of
(a) a thermoplastic selected form the group consisting of low density polyethylene, linear low density polyethylene, ethylene vinyl acetate copolymers, ethylene (meth)acrylic acid copolymers and sodium, zinc, magnesium or lithium ionomers of ethylene (meth)acrylic acid copolymers,
(b) a fungicidal compound melt-blended with the thermoplastic in an amount, based on the blend, of from 0.15 to 10 weight percent, the fungicide selected from the group consisting of sorbic acid, benzoic acid, p-hydroxybenzoic acid, non-toxic metal salts of those acids, 1 to 4-carbon-alkyl alkyl esters of those acids, propionic acid non-toxic metal salts and propionic acid 1 to 4-carbon-alkyl alkyl esters,
the at least one layer having a haze level of 15% or below.

2. The composition of claim 1 wherein the fungicide is sorbic acid, benzoic acid or p-hydroxybenzoic acid, present at a level of from 0.15 to 3 weight percent.

3. The composition of claim 1, wherein the fungicide is a non-toxic metal salt of sorbic acid, benzoic acid, p-hydroxybenzoic acid or propionic acid, present at a level of from 0.15 to 10 weight percent.

4. The composition of claim 3 wherein the non-toxic metal salt is present at a level of from 3 to 10 weight percent.

5. A heat-sealable or closeable, heat-sealed bag for packaging fungi-prone foods, the bag formed from the film of claim 1, with the proviso that if the film has more than one layer, the inner layer of the bag is the fungicide containing layer.

6. A method of retarding fungal growth on a fungi-prone food product, consisting essentially of:
(a) providing the bag of claim 5,
(b) inserting the fungi-prone food product,
(c) sealing the bag using heat-seal or non heat-seal methods.

## Patentansprüche

1. Folie, die mindestens eine Schicht aufweist, wobei die mindestens eine Schicht aus einer Zusammensetzung besteht, die ein Gemisch aus den folgenden Bestandteilen aufweist:
(a) einem Thermoplast, ausgewählt aus der Gruppe, die aus Hochdruck-Polyethylen, linearem Hochdruck-Polyethylen, Ethylen-Vinylacetat-Copolymeren, Ethylen-(Meth)acrylsäure-Copolymeren und Natrium-, Zink-, Magnesium- oder Lithium-Ionomeren von Ethylen-(Meth)acrylsäure-Copolymeren besteht.
(b) einer fungiziden Verbindung, die in einem auf das Gemisch bezogenen Anteil von 0,15 bis 10 Gew.-% in der Schmelze mit dem Thermoplast vermischt ist,
wobei das Fungizid aus der Gruppe ausgewählt ist, die aus Sorbinsäure, Benzoesäure, p-Hydroxybenzoesäure, ungiftigen Metallsalzen dieser Säuren, Alkylestern dieser Säuren, deren Alkylgruppen 1 bis 4 Kohlenstoffatome enthalten, ungiftigen Metallsalzen der Propionsäure und Propionsäurealkylestern, deren Alkylgruppen 1 bis 4 Kohlenstoffatome enthalten, besteht,
wobei die mindestens eine Schicht einen Trübungsgrad von höchstens 15% aufweist.

2. Zusammensetzung nach Anspruch 1, wobei das Fungizid Sorbinsäure, Benzoesäure oder p-Hydroxybenzoesäure ist, die in einem Anteil von 0,15 bis 3 Gew.-% enthalten ist.

3. Zusammensetzung nach Anspruch 1, wobei das Fungizid ein ungiftiges Metallsalz von Sorbinsäure, Benzoesäure, p-Hydroxybenzoesäure oder Propionsäure ist, das in einem Anteil von 0,15 bis 10 Gew.-% enthalten ist.

4. Zusammensetzung nach Anspruch 3, wobei das ungiftige Metallsalz in einem Anteil von 3 bis 10 Gew.-% enthalten ist.

5. Heißverschweißbarer oder verschließbarer, heißverschweißter Beutel zum Verpacken von pilzanfälligen Nahrungsmitteln, wobei der Beutel aus der Folie nach Anspruch 1 hergestellt wird, unter der Voraussetzung, daß im Falle einer Folie mit mehr als einer Schicht die innere Schicht des Beutels die fungizidhaltige Schicht ist.

6. Verfahren zur Verzögerung des Pilzwachstums auf einem pilzanfälligen Nahrungsmittelprodukt, wobei das Verfahren im wesentlichen aus den folgenden Schritten besteht:
(a) Bereitstellen des Beutels nach Anspruch 5,
(b) Einbringen des pilzanfälligen Produkts,
(c) Verschließen des Beutels durch Verfahren mit oder ohne Heißverschweißen.

## Revendications

1. Film comprenant au moins une couche, ladite au moins une couche étant formée à partir d'une composition contenant un mélange de :
(a) un thermoplastique sélectionné parmi le groupe composé de polyéthylène basse densité, de polyéthylène basse densité linéaire, de copolymères d'éthylène et d'acétate de vinyle, de copolymères d'éthylène et d'acide (méth)acrylique et d'ionomères au sodium, zinc, magnésium et lithium de copolymères d'éthylène et d'acide (méth)acrylique,
(b) un composé fongicide mélangé en fusion au thermoplastique en une quantité, basée sur le mélange, de 0,15 à 10 pourcent en poids, le fongicide étant sélectionné parmi le groupe composé de l'acide sorbique, de l'acide benzoïque, de l'acide p-hydroxybenzoïque, de sels de métaux non toxiques de ces acides, d'esters alkyliques de ces acides avec alkyle en C₁₋C₄, de sels de métaux non toxiques de l'acide propionique et d'esters alkyliques d'acide propionique avec alkyle en C₁₋C₄, ladite au moins une couche ayant une concentration en trouble de 15% ou inférieure.

2. Composition selon la revendication 1 dans laquelle le fongicide est l'acide sorbique, l'acide benzoïque ou l'acide p-hydroxybenzoïque, présent en une concentration de 0,15 à 3 pourcent en poids.

3. Composition selon la revendication 1, dans laquelle le fongicide est un sel de métal non-toxique de l'acide sorbique, de l'acide benzoïque, de l'acide p-hydroxybenzoïque ou de l'acide propionique, présent en une concentration de 0,15 à 10 pourcent.

4. Composition selon la revendication 3 dans laquelle le sel de métal non toxique est présent en une concentration de 3 à 10 pourcent en poids.

5. Sac scellé thermiquement, pouvant être scellé ou être fermé thermiquement pour emballer des aliments prédisposés aux champignons, le sac étant formé à partir du film de la revendication 1, à condition que le film présente plus d'une couche et que la couche intérieure du sac soit la couche contenant le fongicide.

6. Procédé pour retarder la croissance fongique sur un produit alimentaire prédisposé aux champignons, composé essentiellement de :
(a) la fourniture du sac selon la revendication 5,
(b) l'insertion du produit alimentaire prédisposé aux champignons,
(c) le scellement du sac en utilisant des procédés de scellement thermique et de scellement non thermique.
